Europäisches Patentamt

European Patent Office

Office européen des brevets

(11) Publication number: **0 029 597**

**A1**

(12) # EUROPEAN PATENT APPLICATION

(21) Application number: **80107271.1**

(22) Date of filing: **21.11.80**

(51) Int. Cl.³: **C 09 D 3/81**
**C 09 D 3/80, C 08 L 33/12**

(30) Priority: **21.11.79 US 96286**
**05.05.80 US 146268**

(43) Date of publication of application:
**03.06.81 Bulletin 81/22**

(84) Designated Contracting States:
**BE CH DE FR GB IT LI NL SE**

(71) Applicant: **E.I. DU PONT DE NEMOURS AND COMPANY**
**Legal Department 1007 Market Street**
**Wilmington, Delaware 19898(US)**

(72) Inventor: **Chang, David Chi-kung**
**945 Stephenson Highway**
**Troy Michigan 48084(US)**

(74) Representative: **Abitz, Walter, Dr.-Ing.**
**Abitz, Morf, Gritschneder P.O. Box 86 01 09**
**D-8000 München 86(DE)**

(54) **An aqueous thermosetting acrylic coating composition, articles coated therewith, and process for preparing said coated articles.**

(57) An aqueous coating composition is disclosed which comprises about 10-60% by weight of film-forming constituents which consist of

(1) 60-90% by weight, based on the weight of the film-forming constituents, of an acrylic polymer consisting of polymerized monomers of methyl methacrylate, butyl acrylate, hydroxyethyl acrylate, and of acrylic acid or methacrylic acid; wherein 30-50% by weight of the acrylic polymer is dispersed and has a particle size of 0.01-0.10 microns and the remaining 50-70% is soluble and dissolved, and

(2) 10-40% by weight, of hexakis(methoxymethyl)melamine; and

the composition contains sufficient amine to provide a pH of about 7.1-7.5; and

the composition contains about 1-20% by weight, of ultraviolet light stabilizer. The weatherability and durability of finishes prepared therefrom are significantly increased.

EP 0 029 597 A1

FF-7624-A                    TITLE

"An Aqueous Thermosetting Acrylic Coating
Composition, Articles Coated Therewith, and
Process for Preparing Said Coated Articles".

BACKGROUND OF THE INVENTION

This invention relates to coating compositions. In particular, it is directed toward aqueous thermosetting acrylic enamels as disclosed in Gregorovich and Sanderson United States Patent 4,164,488 issued August 14, 1979, which enamels contain one or more ultraviolet light stabilizers to diminish the degradation effects of the ultraviolet radiation in sunlight and, optionally, one or more antioxidants to inhibit or retard the rate of oxidation.

Sunlight is composed of electromagnetic radiation with energy in the infrared, visible, and ultraviolet portions of the spectrum. When the ultraviolet portion of sunlight falls upon a clear surface coating, the energy may be partially or wholly absorbed by the coating. In many instances, the energy absorbed initiates a photochemical reaction which causes discoloration and/or physical failure of the coating. Pigmented surface coatings also suffer from ultraviolet degradation. The inclusion of an ultraviolet light stabilizer can increase the useful life of both clear and pigmented coatings. Ultraviolet light stabilizers protect the coatings by absorbing the destructive, high energy ultraviolet rays and converting such energy into nondestructive heat energy.

Antioxidants are useful in preventing the oxidation of polymers, or for inhibiting the oxidation already begun by oxygen, air, ozone, or oxidizing agents of many types. The rate of thermal oxidation of the polymeric systems used in coating compositions is normally rather slow, i.e., a reaction that occurs over weeks, months, or years under ordinary conditions. However, even though the reaction is often slow, pronounced effects may be readily observable very early in the degradative reaction. Furthermore, more rapid oxidative degradation occurs in the presence of ultraviolet radiant energy. Antioxidants can assist ultraviolet light stabilizers in effectively retarding this degradation.

Acrylic enamel finishes are widely used on the exterior of automobiles and trucks. It has been found that an excellent appearance along with depth of color and metallic glamour can be obtained by applying a clear or transparent coat over the conventional colored or pigmented coat. However, the weatherability and durability of these clear coats have been found to be poor. Checking, cracking and flaking of the clear coat occur after relatively short periods of exexposure to outdoor weathering, giving the automobile or truck an unsightly appearance. Refinishing of these weathered clear coats is difficult and expensive, since the clear coat must be sanded to remove cracked and flaked clear coat before a refinish coat can be applied.

In an effort to retard or substantially reduce checking, cracking and flaking of the clear coat, conventional ultraviolet light stabilizers with and without antioxidants have been added to the clear coat. Also, a combination of a transparent pigment and an ultraviolet light screener has been added to the clear coat, as suggested by LaBerge United States Patent 3,407,156 issued October 22, 1968. In each of the cases mentioned, the durability and weatherability of the clear coat was increased for a relatively small length of time but not to the extent required for a practical automotive or truck finish. There exists a felt need for acrylic enamels effectively stabilized against ultraviolet radiation for use in a clear coat/ color coat system.

Ultraviolet light stabilizers and antioxidants have traditionally been used only in those coating compositions which are utilized as topcoats. The problem with this procedure has been the tendency of the stabilizer or antioxidant to leach out of the topcoat and escape into the atmosphere, leaving the topcoat susceptible to weathering.

The composition of this invention, containing ultraviolet light stabilizer and, optionally, antioxidant, has a preferred utility of being used as a clear coat/color coat finish and particularly as the color coat of such a finish. It is theorized that the ultraviolet light stabilizer will migrate from the color coat into the clear coat, thereby protecting the clear coat against weathering. The preferred finish is one in which both the clear coat and the color coat contain as additives one or more ultraviolet light stabilizers and one or more antioxidants. Some of the additives will be consumed from the clear surface through leaching, evaporation, and photochemical reaction. The high concentration of additives in the color coat will serve as a reservoir and replenish the lost additives through diffusion from the color coat to the clear coat.

Aqueous thermosetting acrylic enamels prepared according to the teachings of Gregorovich and Sanderson give finishes which are characterized by a glossy and smooth appearance. These finishes have water-spot resistance, excellent craze resistance, good durability and weatherability and gloss retention, and also good gasoline resistance. These characteristics make the acrylic enamels of Gregorovich and Sanderson particularly useful as an exterior finish for automobiles and trucks. The novel compositions of this invention, consisting essentially of the Gregorovich and Sanderson acrylic enamels, ultraviolet light stabilizers, and, optionally, antioxidants, are even more useful, particularly when utilized in clear coat/color coat finishes as described.

SUMMARY OF THE INVENTION

Aqueous thermosetting acrylic enamels are prepared according to the teachings of Gregorovich and Sanderson, United States Patent 4,164,488. The enamel may be either clear or pigmented, depending upon its intended use. The enamel contains about 1-20% by weight, based on the weight of the film-forming constituents, of ultraviolet light stabilizer. Optionally, the enamel also contains about 0.1-5% by weight of antioxidant, wherein the weight ratio of ultraviolet light stabilizer to antioxidant is about 1:1 to about 50:1. Preferably, about 5-8% by weight of the stabilizer is used, optionally with about 0.1-1% by weight of antioxidant, wherein the weight ratio of stabilizer to antioxidant is about 10:1. The specified percentages of ultraviolet light stabilizer or antioxidant may be obtained by combining two or more ultraviolet light stabilizers or two or more antioxidants as well as by utilizing such additives singularly.

DETAILED DESCRIPTION OF THE INVENTION

A coating composition has been developed in which ultraviolet light stabilizer is incorporated into an aqueous thermosetting acrylic enamel prepared by the method disclosed in Gregorovich and Sanderson United States Patent 4,164,488. The teachings of the Gregorovich and Sanderson patent are hereby incorporated by reference.

These enamels utilize a particular acrylic polymer having a uniform composition and having a balance of hydroxyl and carboxyl groups in combination with a water-dispersible or water-soluble cross-linking agent. These enamels meet the needs of the automobile and truck manufacturing industry for a high quality finish, while avoiding the environmental problems connected with solvent-based systems.

The film-forming constituents of the novel coating composition comprise 60-90% by weight of acrylic polymer and, correspondingly, 40-10% by weight of a water-dispersible or water-soluble cross-linking resin; preferably, an alkylated melamine formaldehyde resin which is compatible with the acrylic polymer is used. Preferably, the novel composition contains 65-85% by weight of the acrylic polymer and 35-15% by weight of an alkylated melamine formaldehyde resin. More preferably, about 70% by weight of the acrylic polymer is used in combination with about 30% by weight of an alkylated melamine formaldehyde resin.

The acrylic polymer used in the novel coating composition of this invention is partially soluble and partially dispersed in the aqueous medium. About 30-50% by weight of the acrylic polymer is dispersed and has a particle size of about 0.01-0.10 microns, preferably about 0.02-0.06 microns. The residual 50-70% by weight of the acrylic polymer is soluble and dissolved in the aqueous medium. To obtain water solubility and dispersibility, the acrylic polymer has a carboxyl-to-hydroxyl ratio of 1:0.2 to 1:1.8, which is the molar ratio of carboxyl groups to hydroxyl groups of the polymer. Acrylic polymers having a carboxyl-to-hydroxyl ratio of 1:.02 to 1:4 are also useful.

The acrylic polymer used in the novel coating composition of this invention has a uniformity factor of at least 75% and preferably 80-95%. The uniformity factor is the percent of the polymer in which the constituents are present within plus or minus 15% of the average amount given for the polymer.

The acrylic polymer utilized in the novel composition of this invention is prepared by a programmed addition of the monomers, polymerization catalysts, and solvents. This programmed addition process is an attempt to form, at all stages of the polymerization process, polymer which is essentially the same as the predetermined composition, and it results, upon completion of the process, in a polymer composition having a uniformity factor of at least 75%. This process allows for high percentage conversion of monomers to polymer and also provides a polymer having a relatively uniform molecular weight. These polymers, when used in the novel composition of this invention, provide high quality finishes.

Conventional polymerization processes such as batch polymerization, commonly used in the art, provide polymers with a wide range of compositions and molecular weights which are unsuitable for the novel coating composition of this invention.

The above programmed addition polymerization process is based on a computer program which uses known polymerization equations and activity ratios of monomers to determine the monomer addition rates and ratios and the polymer polymerization temperatures and times. This forms a polymer that has a uniform composition throughout. The programmed addition procedure can be based on a computer program which uses a polymerization equation in which the polymerization values of the monomers are used. In general, the programmed polymerization procedure comprises an initial charge of monomers and solvents which are heated to the reflux temperature in the polymerization vessel, after which monomers and polymerization initiator are charged into the vessel at given intervals while maintaining a reflux temperature in keeping with the programmed polymerization procedure. Throughout the polymerization reaction, the polymer being formed has a uniformity factor of at least 75%. In general, the polymerization is conducted at about 75-125°C. over a 2-4 hour period to form a polymer having a weight average molecular weight of about 5,000-80,000, and preferably, about 10,000-50,000, and more preferably, about 35,000-45,000, as determined by gel permeation chromotography. The polymer has an acid number of about 35-150, preferably about 35-80.

Typical solvents used in the polymerization process are isopropanol, n-propyl alcohol, diacetone alcohol and other alcohols, acetone, acetyl acetone, ethyl glycol monoethyl ether, ethylene glycol monobutyl ether and ethylene glycol monomethyl ether acetate. Solvents of limited water solubility such as methyl ethyl ketone or ethylene glycol monoethyl ether acetate can be used. The novel composition can contain up to about 20% by weight of solvent but preferably contain 5-15%. If desired, the novel composition may be made solvent-free.

About 0.1-4% by weight, based on the weight of the monomer used to prepare the acrylic polymer, of the polymerization catalyst is utilized. Typical catalysts are azobisisobutyronitrile, azo-bis-( $\alpha,\gamma$ - dimethylvaleronitrile), benzoyl peroxide, t-butyl per- oxypivalate, t-butyl peracetate and the like. Chain transfer agents such as lauryl mercaptan are also used.

The acrylic polymer contains 20-60% by weight of a hard constituent which can be methyl methacrylate or a mixture of methyl methacrylate and styrene; up to 40% by weight of the polymer can be styrene. The acrylic polymer can contain 5-30% by

weight of styrene in combination with 15-30% by weight of methyl methacrylate. Preferably, the polymer contains about 52-57% by weight of methyl methacrylate.

The acrylic polymer contains 20-40% by weight of a soft acrylic constituent which is either an alkyl acrylate having 2-12 carbon atoms in the alkyl group or an alkyl methacrylate having 4-12 carbon atoms in the alkyl group, or a mixture of these two constituents. Preferably, the acrylic polymer contains 28-38% by weight of the soft acrylic constituent, which is preferably an alkyl acrylate having 2-8 carbon atoms in the alkyl group. The following are typical soft acrylic monomers which can be utilized: ethyl acrylate, propyl acrylate, isopropyl acrylate, butyl acrylate, isobutyl acrylate, hexyl acrylate, 2-ethylhexyl acrylate, octyl acrylate, nonyl acrylate, lauryl acrylate and the like, butyl methacrylate, isobutyl methacrylate, pentyl methacrylate, hexyl methacrylate, octyl methacrylate, 2-ethylhexyl methacrylate, decyl methacrylate, lauryl methacrylate and the like. Butyl acrylate is the preferred soft acrylic constituent since it forms a high quality polymer with excellent physical properties.

Under some conditions, up to 60% of the soft acrylic constituent can be used to prepare the acrylic polymer. Butyl methacrylate, for example, can be used in this amount.

The acrylic polymer contains 4-20% by weight of a hydroxy-containing constituent such as a hydroxyalkyl acrylate, a hydroxyalkyl methacrylate, or a mixture of these two compounds. Preferably, the polymer contains about 5-10% of the hydroxy-containing constituent. These constituents contain 2-4 carbon atoms in the alkyl groups and are, for example, hydroxyethyl acrylate, hydroxybutyl acrylate, hydroxyethyl methacrylate, hydroxypropyl methacrylate, and hydroxybutyl methacrylate.

The acrylic polymer also contains 4-20% by weight, based on the weight of the acrylic polymer, of an $\alpha,\beta$ -unsaturated carboxylic acid. Typically useful acids are acrylic acid, methacrylic acid, crotonic acid, itaconic acid, propylacrylic acid, and the like. Preferably, acrylic acid and methacrylic acid are used in amounts of 4-10% by weight since these acids form high quality polymers useful in the novel composition of this invention.

The novel coating composition of this invention contains 10-40% by weight, based on the weight of the film-forming constituents, of a water-dispersible or water-soluble cross-linking resin. Preferably, alkylated melamine formaldehyde resins are used in an amount of about 20-40% by weight of this resin. The alkylated melamine formaldehyde resins have 1-4 carbon atoms in the alkyl group, can be partially or fully alkylated, and are prepared by conventional techniques wherein an alkanol such as methanol, ethanol, 1-propanol, 2-propanol, or 1-butanol is reacted with melamine formaldehyde resin. Partially methylated melamine formaldehyde resins having 2-5 methylated groups and a molecular weight of 200-500 can be used. One preferred resin is hexakis(methoxymethyl)melamine. Melamine formaldehyde resins partially alkylated with 2-propanol or 1-butanol are other useful resins. Urea formaldehyde resins can also be used as the cross-linking resin.

If it is to be employed as a color coat, the enamel contains pigment in a pigment to binder weight ratio of about 1/100 to about 150/100. Any of the conventional pigments used in coating compositions, including metallic flake pigments, can be used. If the enamel is to be employed as a clear coat, it may contain one or more transparent pigments, i.e., pigments having the same or similar refractive index as the binder of the clear coat and a small particle size of about 0.015-50 microns. Typical pigments that can be used, in a pigment-to-binder weight ratio of about 1/100 to 10/100, are inorganic siliceous pigments such as silica pigments. These pigments have a refractive index of about 1.4-1.6.

Two particularly useful additives for both the color coat and clear coat are finely divided silica, mentioned above, and iron pyrophosphate. Up to about 10% by weight of iron pyrophosphate and up to about 15% by weight of silica, based on the weight of the film-forming constituents, can be used. The addition of iron pyrophosphate and silica will improve the overall durability and performance of the finish. Although applicant does not wish to be bound by the following theory, it is believed that iron pyrophosphate creates a synergistic effect with ultraviolet light stabilizers and antioxidants, yielding a period of outdoor weatherability surpassing that which would cumulatively be expected from a combination of the three types of additives.

Typical ultraviolet light stabilizers that are useful in this invention are as follows:

Benzophenones such as hydroxydodecycloxybenzophenone, 2,4-dihydroxybenzophenone, hydroxybenzophenones containing sulfonic acid groups, 2,4-dihydroxy-3',5'-di-t-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of diallyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-$\beta$-(3,5-di-t-butyl-4-hydroxyphenyl)propionate, $\gamma$,$\gamma$'-bis(2-hydroxy-phenyl)diisopropylbenzene, 3,5'-dibromo-2'-hydroxyacetophenone, ester derivatives of 4,4-bis(4'-hydroxy-phenyl)pentanoic acid wherein there is at least one unsubstituted position ortho to the aromatic hydroxyl groups, organophosphorus sulfides such as bis(diphenyl-phosphinothioyl)monosulfide and bis(diphenylphosphino-thioyl)disulfide, 4-benzoyl-6-(dialkylhydroxybenzyl)resorcinol, bis(3-hydroxy-4-benzoylphenoxy)diphenylsilane, bis(3-hydroxy-4-benzoylphenoxy)dialkylsilane, 1,8-naphthalimides, $\gamma$-cyano-$\beta$,$\beta$-diphenylacrylic acid derivatives, bis(2-benzoxazolyl)alkanes, bis(2-napthoxazolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl- or alkyl-substituted acrylonitriles, 3-methyl-5-isopropylphenyl-6-hydroxycoumarone.

Particularly useful ultraviolet light stabilizers that can be used are hindered amines of bipiperidyl derivatives such as those disclosed in Murayama et al., U.S. Patent 4,061,616, issued December 6, 1977, column 2, line 65, through column 4, line 2, and nickel compounds such as /I-phenyl-3-methyl-4-decanoylpyrazolate (5)_7-Ni, bis/phenyldithiocarbamato_7÷Ni(II), and others listed in the above patent, column 8, line 44 through line 55.

Typical antioxidants are as follows: tetrakis-alkylene dialkylhydroxyaryl alkyl ester alkanes such as tetrakismethylene-3-(3',5'-dibutyl-4'-hydroxyphenyl) propionate methane, the reaction product of p-aminodi-phenylamine and glycidyl methacrylate, the reaction product of n-hexyl-N'-phenyl-p-phenylene diamine and glycidyl methacrylate, pentaerythritol tetrakis(thioglycolate), trimethylolpropane tris(thioglycolate), trimethylolethane tris(thioglycolate), N-(4-anilino-phenyl)acrylamide, N-(4-anilinophenyl)maleamic acid, N-(4-anilinophenyl)maleimide, alkylhydroxyphenyl groups bonded through carboalkoxy linkages to the nitrogen atom of a heterocyclic nucleus containing an imidocarbonyl group or an imidodithiocarbonyl group, 3,5-di-t-butyl-4-hydroxycinnamonitrile, ethyl-3,5-di-t-hexyl-4-hydroxy-cinnamate, substituted benzyl esters of β-substituted hydroxyphenylpropionic acids, bis(hydroxyphenylalkylene) alkyl isocyanurate compounds, tetrakishydroxybenzylphos-phonium halides alone or in combination with a dialkyl-thiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphoro-
thionates or phosphinothionates, diphenylbis(3,5-di-t-
butyl-4-hydroxyphenoxy)silane, hydrocarbylhydroxyphenyl-
dihydrocarbyldithiocarbamates such as 3,5-di-t-butyl-
4-hydroxyphenyldimethyldithiocarbamate and aminobenzyl-
thioether.

Aqueous thermosetting acrylic enamels prepared in the manner described and containing about 1-20%
by weight, and preferably about 5-8% by weight, based on
the weight of the film-forming constituents, of ultraviolet light stabilizer, and, optionally, about 0.1-5%
by weight, and preferably about 0.1-1% by weight, of
antioxidant prove particularly useful in the clear coat/
color coat finishes described. Where an antioxidant is
used, the weight ratio of ultraviolet light stabilizer
to antioxidant ranges from about 1:1 to about 50:1 and
is preferably about 10:1.

The novel coating composition of this invention can be applied to a variety of substrates such as
glass, plastics, metal and the like, by any of the
usual application methods such as spraying, electrostatic spraying, dipping, brushing, flow coating, and
the like. These coatings are baked according to conventional procedures. One preferred baking cycle
comprises a prebake at about 75-95°C. for about 5-30
minutes and then a bake at about 125-200°C. to provide
a high quality finish. The resulting finish is about
0.5-3.5 mils thick, preferably 1-2.5 mils in thickness,
and can be rubbed or polished in accordance with conventional techniques to improve smoothness or gloss or
both.

EXAMPLE

The following constituents are blended together to form Paint A (control):

Parts by Weight

Portion 1

Acrylic resin solution (19.23 parts of          52.90
a water reduced acrylic resin of methyl
methacrylate/butyl actylate/hydroxy-
ethyl acrylate/acrylic acid in a weight
ratio of 54/34/6/6 in 2.94 parts of
2-ethyl hexanol, 1.76 parts of ethylene
glycol monomethyl ether, 26.73 parts of
demineralized water, 1.17 parts of
methanol, and neutralized with 1.09
parts of diethylethanolamine  to a pH
between 7.0-7.5)

Portion 2

Demineralized water                             29.87

Diethylene glycol monobutyl ether                1.57

Slow evaporating hydrocarbon with a               .78
distillation range of 182-219°C.

Silicone solution (.03 parts of silicone          .29
in .26 parts of demineralized water)

Hexamethoxymethylmelamine (liquid form)         8.66

Portion 3

Aluminum flake mill base (1.95 parts of          4.97
fine particle size aluminum flake, 1.07
parts of an acrylic resin of methyl
methacrylate/butyl acrylate/acrylic acid
in a weight ratio of 56/34/10, 1.82 parts
of ethylene glycol monoethyl ether, and
.12 parts of diethylethanolamine)

Blue mill base (.27 parts of red toned            .94
phthalocyanine blue pigment, .16 parts
of a 100% neutralized acrylic resin of
methyl methacrylate/butyl acrylate,
acrylic acid in a weight ratio of 50/30/20,
.50 parts of demineralized water)

                                      Total     99.98

Portion 1 is charged into a mixing vessel and mixed for 10 minutes, Portion 2 is added and mixed for 10 minutes, and then Portion 3 is added and mixed for 20 minutes to form Paint A.

Paint B is prepared as follows:

|  | Parts by Weight |
|---|---|
| Paint A (prepared above) | 50.000 |
| Ultraviolet light stabilizer (2-hydroxy-4-methoxy-2'-carboxybenzophenone) | 0.684 |
| Antioxidant /tetrakismethylene-3-(3',5'-dibutyl-4'-hydroxyphenyl)propionate methane/ | 0.068 |
| Total | 50.752 |

The above constituents are mixed together for 15 minutes to form Paint B.

A clear coating, Clear Coat A (control) is prepared by blending together the following constituents:

|  | Parts by Weight |
|---|---|
| **Portion 1** | |
| Acrylic resin solution (20.80 parts of a water reduced acrylic resin of methyl methacrylate/butyl acrylate/hydroxyethyl acrylate/acrylic acid in a weight ratio of 54/34/6/6 in 3.18 parts of 2-ethyl hexanol, 1.90 parts of ethylene glycol monoethyl ether, 1.27 parts of methanol, 1.18 parts of diethylethanolamine, 28.92 parts of demineralized water) | 57.23 |
| **Portion 2** | |
| Hexamethoxymethylmelamine (liquid) | 8.94 |
| Silicone solution (.03 parts of silicone in .27 parts of demineralized water) | .30 |
| Diethylethanolamine | .85 |
| Diethylene glycol monobutyl ether | 3.65 |
| Demineralized water | 29.03 |
| Total | 100.00 |

Portion 1 is charged into a mixing vessel and mixed for 10 minutes. Portion 2 is added and mixed for 20 minutes to form Clear Coat A.

Clear Coat B is prepared as follows:

| | Parts by Weight |
|---|---|
| Clear Coat A (prepared above) | 50.000 |
| Ultraviolet light stabilizer (described above) | .868 |
| Antioxidant (described above) | .030 |
| Total | 50.898 |

Paint A (control) and Paint B are reduced to a spray viscosity of 47.5 seconds measured at 250°C. with a No. 1 Fisher Cup with a paint thinner of acetone/toluene/xylene in a ratio of 27.5/43.5/34. The reduced paints are each sprayed onto separate phosphatized steel panels and allowed to air dry for 10 minutes.

Clear Coat A (control) and Clear Coat B are similarly reduced to a spray viscosity. Clear Coat A (control) is sprayed onto the Paint A (control) coated panel. Clear Coat B is sprayed onto the Paint B coated panel. Each is allowed to air dry 10 minutes and is then baked for 10 minutes at 82°C. and for 30 minutes at 150°C. The clear coat on each of the panels is about 1.2 mils thick, and the paint on each of the panels is about 0.8 mil thick.

The panels are then exposed to a Q.U.V. "Weather-O-Meter" that uses a SF 40 Westinghouse ultraviolet lamp and has the following cycles: 8 hours ultraviolet exposure at 68°C. and 4 hours at 100% relative humidity at 55°C. The gloss of each of the panels is measured at 20° after given exposure times and checking of the clear coat is noted. The results are as follows:

EXPOSURE DATA

Gloss Measured at 20°C.

| Time Exposure (hrs.) | 0 | 400 | 800 | 1200 | 1400 |
|---|---|---|---|---|---|
| Clear Coat A/ Color Coat A (control) | 90 | 81 | 67 | 39 | 21 |
| Clear Coat B/ Color Coat B | 80 | 81 | 77 | 73 | 71 |

EXPOSURE DATA, Cont.

| Time Exposure (hrs.) | 1800 | 2200 | 2600 | 2800 |
|---|---|---|---|---|
| Clear Coat A/ Color Coat A (control) | - - - - | F A I L E D | - - - - | |
| Clear Coat B Color Coat B | 68 | 58 ( distorted ) | 28 | 16 |

The results show that the control failed after 1400 hours, while Clear Coat B/Color Coat B, containing an ultraviolet light stabilizer and antioxidant, distorted only after 2200 hours' exposure. From these data, it can be expected that clear coat/color coat systems of an aqueous acrylic dispersion enamel containing ultraviolet light stabilizer and antioxidant will have an outdoor durability substantially better than that of the same enamel not containing ultraviolet light stabilizer and antioxidant.

Applicant believes that it is the ultraviolet light stabilizer, and not the antioxidant, which contributes significantly to increases in durability. Thus, it is expected that clear coat/color coat systems of aqueous acrylic dispersion enamel containing one or more ultraviolet light stabilizers, but no antioxidant, will also display pronounced improvement in weatherability.

## CLAIMS

1. An aqueous thermosetting acrylic enamel coating composition, free of external surfactants, which comprises about 10-60% by weight of film-forming constituents and correspondingly about 40-90% by weight of a solvent for the film-forming constituents; wherein the film-forming constituents consist essentially of

(1) 60-90% by weight, based on the weight of the film-forming constituents, of an acrylic polymer having a uniformity factor of 80-95% and consisting essentially of polymerized monomers of about

    (a) 50-60% by weight, based on the weight of the acrylic polymer, of methyl methacrylate;

    (b) 30-40% by weight, based on the weight of the acrylic polymer, of butyl acrylate;

    (c) 5-10% by weight, based on the weight of the acrylic polymer, of hydroxyethyl acrylate;

    (d) 4-12% by weight, based on the weight of the acrylic polymer, of acrylic acid or methacrylic acid;

wherein 30-50% by weight of the acrylic polymer is dispersed and has a particle size of 0.01-0.10 microns and the remaining 50-70% is soluble and dissolved and the polymer has a carboxyl-to-hydroxyl ratio of 1:0.3 to 1:1.5, an acid number of about 35-80, and a weight average molecular weight of 10,000-50,000, and

(2) 10-40% by weight, based on the weight of the film-forming constituents, of a hexakis(methoxymethyl) melamine; and

the composition contains sufficient amine to provide a pH of about 7.1-7.5; and

the composition contains about 1-20% by weight, based on the weight of the film-forming constituents, of ultraviolet light stabilizer.

2. A composition according to claim 1 wherein the acrylic polymer consists essentially of 28-32% by weight of styrene, 22-25% by weight of methyl methacrylate, 30-35% by weight of butyl acrylate, 7-9% by weight of hydroxyethyl acrylate, 4-6% by weight of acrylic acid, and has an acid number of 30-50 and a carboxyl to hydroxyl ratio of 1:0.4 to 1:1.5.

3. A composition according to claim 1 wherein the acrylic polymer consists essentially of 54% methyl methacrylate, 34% butyl acrylate, 6% 2-hydroxyethyl acrylate and 6% acrylic acid, and has an acid number of about 45-50 and a carboxyl to hydroxyl ratio of about 1:0.6.

4. A composition according to any one of claims 1 to 3 containing 0.1-40% by weight of pigment and having a polymer solids content of about 20-50% by weight.

5. A composition according to any one of claims 1 to 4 which contains up to about 10% by weight, based on the weight of the film-forming constituents, of iron pyrophosphate and up to about 15% by weight of finely-divided silica.

6. A composition according to any one of claims 1 to 5 which contains about 5-8% by weight, based on·the weight of the film-forming constituents, of ultraviolet light stabilizer.

7. A composition according to any one of claims 1 to 6 which contains about 0.1-5% by weight, based on the weight of the film-forming constituents, of antioxidant, preferably tetrakismethylene-3-(3',5'-dibutyl-4'-hydroxyphenyl) propionate methane, wherein the weight ratio of ultraviolet light stabilizer to antioxidant is about 1:1 to about 50:1.

8. A composition according to claims 6 or 7 which contains about 0.1-1% by weight, based on the weight of the film-forming constituents, of antioxidant,, wherein the weight ratio of ultraviolet light stabilizer to antioxidant is preferably about 10:1.

9. A composition according to any one of claims 1 to 8 wherein the ultraviolet light stabilizer is a benzophenone or a substituted benzotriazole, preferably 2-hydroxy-4-methoxy-2'-carboxybenzophenone or hydroxyphenyl benzotriazole.

10. A coated article consisting essentially of a substrate, a first coating on said substrate, said first coating consisting essentially of a film-forming binder of the coating composition of claim 1 containing 0.1-40% by weight of pigment, and a transparent second coating over said first coating.

11. A coated article according to claim 10 wherein the first coating is about 0.8 mil thick and the second coating is about 1.2 mils thick, and wherein preferably both the first and second coating contain ultraviolet light stabilizer.

12. A coated article according to claim 10 wherein both the first and second coating consist essentially of the composition of claim 2.

13. A process for producing an aqueous acrylic enamel finish having excellent aesthetic properties and outstanding weatherability and durability, which comprises:

A. depositing on a substrate a first coating consisting essentially of the composition of claim 1 containing 0.1-40% by weight of pigment;

B. allowing said substrate to air dry for about 10 minutes;

C. depositing over said first coating a transparent second coating; and

D. heating the resultant multilayer coating for about 10 minutes at 80-85°C. and for about 30 minutes at 150°C.

# DOCUMENTS CONSIDERED TO BE RELEVANT

| Category | Citation of document with indication, where appropriate, of relevant passages | Relevant to claim |
|---|---|---|
| D | US - A - 4 164 488 (B.V. GREGORO-VICH et al.)<br>* Claims * | 1-13 |
| | FR - A - 1 551 585 (LAVORAZIONE MATERIE PLASTICHE)<br>* Abstract * | 1-13 |
| | US - A - 3 522 207 (D.H.A. HAYER et al.)<br>* Claims * | 1-13 |
| | FR - A - 1 429 032 (AMERICAN CYA-NAMID)<br>* Abstract * | 1-13 |
| X | CHEMICAL ABSTRACTS, vol. 81, no. 24, 16th December 1974, page 133, no. 154716x<br>Columbus, Ohio, U.S.A.<br>& JP - A - 74 55737 (DAINIPPON PRINTING CO., LTD.) 30-05-1974<br>* Abstract * | 1-13 |

**CLASSIFICATION OF THE APPLICATION (Int. Cl.³)**

C 09 D 3/81
3/80
C 08 L 33/12

**TECHNICAL FIELDS SEARCHED (Int. Cl.³)**

C 09 D 3/81
3/80
C 08 L 33/00
33/02
33/04
33/06
33/08
33/10
33/12
C 09 D 5/32
C 08 K 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-02-1981 | FOUQUIER |

EPO Form 1503.1 06.78